(19) **Europäisches Patentamt**
**European Patent Office**
**Office européen des brevets**

(11) **EP 2 041 604 B1**

(12) **EUROPÄISCHE PATENTSCHRIFT**

(45) Veröffentlichungstag und Bekanntmachung des
Hinweises auf die Patenterteilung:
**26.03.2014 Patentblatt 2014/13**

(51) Int Cl.:
*G01C 3/08* ^(2006.01)     *G01S 17/10* ^(2006.01)

(21) Anmeldenummer: **07786053.4**

(22) Anmeldetag: **13.07.2007**

(86) Internationale Anmeldenummer:
**PCT/EP2007/006226**

(87) Internationale Veröffentlichungsnummer:
**WO 2008/009387 (24.01.2008 Gazette 2008/04)**

(54) **OPTISCHES DISTANZMESSVERFAHREN UND ENTSPRECHENDER OPTISCHER DISTANZMESSER**

OPTICAL DISTANCE MEASURING METHOD AND CORRESPONDING OPTICAL RANGEFINDER

PROCÉDÉ DE MESURE DE DISTANCE OPTIQUE ET TÉLÉMÈTRE OPTIQUE CORRESPONDANT

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **17.07.2006 EP 06117301**

(43) Veröffentlichungstag der Anmeldung:
**01.04.2009 Patentblatt 2009/14**

(73) Patentinhaber: **Leica Geosystems AG**
**9435 Heerbrugg (CH)**

(72) Erfinder: **SIERCKS, Knut**
**9402 Mörschwil (CH)**

(74) Vertreter: **Kaminski Harmann**
**Patentanwälte AG**
**Landstrasse 124**
**9490 Vaduz (LI)**

(56) Entgegenhaltungen:
**WO-A-02/45213      WO-A-2005/008271**
**US-B1- 6 522 396**

**Beschreibung**

Die Erfindung betrifft ein elektrooptisches Distanzmessverfahren nach dem Oberbegriff des Anspruchs 1 sowie einen ebensolchen Distanzmesser nach dem Oberbegriff des Anspruchs 7.

Im Bereich der elektronischen bzw. elektrooptischen Distanzmessung sind verschiedene Prinzipien und Verfahren bekannt. Ein Ansatz besteht darin, gepulste elektromagnetische Strahlung, wie z.B. Laserlicht, auf ein zu vermessendes Ziel auszusenden und nachfolgend ein Echo von diesem Ziel als rückstreuendes Objekt zu empfangen, wobei die Distanz zum zu vermessenden Ziel anhand der Laufzeit des Pulses bestimmt wird. Solche Pulslaufzeitmesser haben sich mittlerweile in vielen Bereichen als Standardlösungen durchgesetzt.

Zur Detektion des zurückgestreuten Pulses werden zumeist zwei unterschiedliche Ansätze verwendet.

Bei der sogenannten Schwellwertmethode wird ein Lichtpuls detektiert, wenn die Intensität der einfallenden Strahlung einen gewissen Schwellwert überschreitet. Durch diesen Schwellwert wird verhindert, dass Rauschen und Störsignale aus dem Hintergrund fälschlich als Nutzsignal, d.h. als rückgestreutes Licht des emittierten Pulses, detektiert werden. Problematisch ist jedoch, dass bei schwachen rückgestreuten Pulsen, wie sie beispielsweise durch grössere Messdistanzen bedingt werden, eine Detektion nicht mehr möglich ist, wenn die Pulsintensität unter die Detektionsschwelle fällt. Der wesentliche Nachteil dieser Schwellwertmethode liegt somit darin, dass die Amplitude des Messsignals hinreichend grösser als die Rauschamplitude von optischen und elektrischen Rauschquellen im Signalweg sein muss, um Fehldetektionen hinreichend zu minimieren.

Der andere Ansatz basiert auf der Abtastung bzw. dem Sampling des rückgestreuten Pulses. Ein emittiertes Signal wird detektiert, indem die von einem Detektor erfasste Strahlung abgetastet, innerhalb des abgetasteten Bereichs ein Signal identifiziert und schliesslich dessen Lage bestimmt wird. Durch die Verwendung einer Vielzahl von Abtastwerten kann ein Nutzsignal auch unter ungünstigen Umständen identifiziert werden, so dass auch grössere Distanzen oder verrauschte bzw. mit Störungen behaftete Hintergrundszenarien bewältigt werden können. Im Stand der Technik erfolgt ein Sampling durch Abtastung vieler identischer Pulse mit Verschiebung des Zeitfensters bzw. der Phase, wobei derzeit sehr schnelle Schaltungen realisiert werden können, die hochfrequent genug sind, um einzelne Pulse abzutasten. Problematisch ist jedoch die vorab notwendige Kenntnis der ungefähren zeitlichen Lage des zu detektierenden Signals, da ansonsten das Zeitfenster als abzutastender Zeitraum und damit das Datenvolumen sehr gross werden kann, oder alternativ die Verwendung vieler Pulse und zu verschiebender Zeitfenster. Ein prohibitiver Nachteil der Signalabtastung liegt jedoch darin, dass im Zustand einer gesättigten Empfangselektronik keine angemessen auswertbaren Informationen des Messsignals mehr zur Verfügung stehen.

WO 02/45213 zeigt einen Time-of-Flight (ToF) Intervall-Timer, der High-Speed-Clock und -Counter. Die Zeitmessung basiert auf einer Delayline, welche Signalspeicherzellen sequentiell ansteuert. Ein Mikroprozessor liest die Speicherzellen und bestimmt eine First-signal-time-Over-Treshold (FOT) und eine Total-time-Over-Treshold (TOT) Information. Eine mit der FOT-Information ermittelte ToF-Messung wird entsprechend der TOT-Information und einer Look-up-Tabelle korrigiert.

WO 2005/008271 zeigt eine Entfernungsmessung bei welcher ein kohärentes Burst-Signal ausgesendet wird und der Empfang eines zurückgeworfenen Anteils mit einem AGC (Automatic Gain Controller) und einem ETS (Equivalent Time Sampling) durchgeführt wird. Die Signalauswertung erfolgt mit einer diskreten Fouriertransformation.

Aus der US 6,115,112 ist ein Messverfahren mittels Signalabtastung bekannt, bei dem eine ungefähre zeitliche Festlegung der Ankunftszeit des Pulses durch eine vorgängig durchgeführte Grobmessung erfolgt. Die Abtastung erfolgt dann im Rahmen einer Feinmessung für einen weiteren Lichtpuls, dessen eingeschränkter möglicher Ankunftszeitraum nun abgetastet wird. Damit erfolgt eine Aufteilung der Messung in eine Grobmessung und eine Feinmessung. Die Anwendung dieses Ansatzes verlangt notwendigerweise eine sequentielle Abfolge, da erst durch die Schwellwertmessung ein Zeitfenster definiert wird, in dem die Samplingmessungen folgen. Somit erfolgt eine zeitlich separierte Abfolge von Grob- und Feinmessung auf unterschiedliche Pulse.

Damit stellen sich als ein wesentlicher Nachteil bisher bekannte Messprinzipien nach dem Pulslaufzeitprinzip entweder die Beschränkung der Signaldetektion durch eine Detektionsschwelle oder aber die Notwendigkeit der Festlegung eines zeitlichen Fensters für die Abtastung bzw. die Sättigung des Detektors dar.

Weitere Nachteile sind die aus der Begrenzung dieser Einflüsse resultierende Anforderungen an die technischen Komponenten, wie z.B. grosse Dynamikbereiche.

Die Aufgabe der vorliegenden Erfindung besteht daher in der Bereitstellung eines neuen Distanzmessverfahrens bzw. eines neuen Distanzmessers, welcher diese Nachteile vermeidet oder verringert.

Insbesondere ist es eine Aufgabe, die Dynamik eines Distanzmessers hinsichtlich des empfangenen Messsignals zu erhöhen bzw. die Anforderungen an seine Komponenten zu verringern.

Diese Aufgaben werden erfindungsgemäss durch die Merkmale der Ansprüche 1 oder 7 bzw. durch die Merkmale der abhängigen Ansprüche gelöst bzw. die Lösungen fortgebildet.

Die Lösung basiert auf der Kombination von zwei in der Entfernungsmessung übliche Grundprinzipien zur Signaldetektion. Das erste der bereits beschriebenen Grundprinzipien basiert auf der Messsignaldetektion anhand der Schwellwertmethode und das zweite Grundprinzip basiert auf der Signalabtastung mit nachgeschalteter Signalverarbeitung zur Identifikation und zeitlichen Lagebestimmung des Signals. Bei der Schwellwertmethode wird zwar meistens die Signaldetektion durch das Überschreiten der Signalamplitude über einen Schwellwert festgelegt, das distanzbestimmende Signalmerkmal aber kann ganz unterschiedlich sein. Einerseits kann die ansteigende Flanke des Empfangssignals den Zeittrigger auslösen, anderseits aber kann das Empfangssignal mittels eines elektronischen Filters in eine andere geeignete Form umgewandelt werden, um ein Triggermerkmal zu generieren, welches vorteilhafterweise unabhängig von der Impulsamplitude ist. Das entsprechende Triggersignal wird als Start- oder Stoppsignal einer Zeitmessschaltung zugeführt.

Beide Ansätze werden parallel zur Signaldetektion angewendet, das heisst, dass ein empfangener Puls bzw. eine Signalstruktur mit beiden Verfahren detektiert wird, was zumeist Gleichzeitigkeit oder zumindest zeitliche Überlappung der Verfahren impliziert.

Für das erfindungsgemässe Verfahren mit der Kombination beider Prinzipien von Schwellwertmethode und Signalabtastung kann von drei grundsätzlichen Empfangssignalzuständen ausgegangen werden:

A) Das Messsignal ist kleiner als der Rauschpegel oder eventuelle Störsignale.

Hier funktioniert die Schwellwertmethode nicht oder nur eingeschränkt, da in diesem Fall durch das Rauschen Fehlmessung ausgelöst werden. Die Samplingmethode kann hier durch Mittelwertbildung über mehrere Signalpulse oder Lasermodulationsfolgen und Signalverarbeitungsmethoden das Signal im Rauschen identifizieren. Beispielsweise kann bei bekannter Sendepulsform dieses Signal aus dem durch Rauschen überlagerten Empfangssignal mittels digitaler Signalverarbeitungsmethoden herausgefiltert werden. Das erfindungsgemäss Verfahren ist somit auch in Bereiche unterhalb der Detektionsschwelle von reinen Schwellwertmethoden nutzbar. Die Identifikationsmethode funktioniert auch für den Fall von Empfangssignalen, welche aus Reflexionsanteilen mehrerer Zielobjekte entstanden sind.

B) Das Signal ist grösser als der Rauschpegel, aber noch kleiner als der Aussteuerbereich der Empfangselektronik.

In diesem Bereich können beide Methoden voll genutzt werden. Wenn beide Methoden parallel, insbesondere gleichzeitig arbeiten, können Fehldetektionen der Schwellwertmethode identifiziert werden und somit kann der Schwellwert gesenkt werden, so dass die Reichweite auch im Einzelpulsmessmodus erhöht werden kann, d.h. für jeden der Pulse wird auch eine Entfernungsmessung durchgeführt. Die gemeinsame Nutzung der Ergebnisse beider Methoden ermöglicht gegebenenfalls eine Genauigkeitssteigerung. Die Abtastung ermöglicht die Bestimmung von Pulslänge und Pulsamplitude, aus welchen die Pulsenergie abgleitet werden kann. Diese Pulsenergie kann zur Korrektur der Abhängigkeit der zeitlichen Lage des Auslösepunkts der Schwellwertmethode genutzt werden. Dieser Fehler wird im allgemeinen als "Range Walk" bezeichnet. Dies kann beispielsweise über eine Korrekturtabelle erfolgen, was eine Kalibrierung des Systems über eine im Stand der Technik übliche Referenzstrecke mit variabler Übertragungsleistung ersetzt. Sollte die Nichtlinearität des Empfängers die Messgenauigkeit begrenzen, so kann diese bei Anwendung der Schwellwertmethode durch die Sampling Methode ergänzt werden.

C) Das empfangene Messsignal ist grösser als der Dynamikbereich der Empfängerelektronik.

Die Schwellwertmethode arbeitet in diesem Bereich, wohingegen die Samplingmethode nur limitierte Informationen unterhalb der Sättigungsgrenze der Empfangselektronik erfasst. Bei entsprechender Flankensteilheit des Messsignals kann dies dazu führen, dass die Messgenauigkeit dann durch das Abtastintervall beschränkt ist. Die Signalform kann dann in der Signalverarbeitung nicht mehr oder nur eingeschränkt genutzt werden. Eine Grobschätzung der Signalenergie des Empfangsimpulses ist jedoch noch möglich, und kann zur Korrektur der Fehler (Range Walk) bei der Distanzbestimmung nach der Schwellwertmethode verwendet werden.

Die Kombination beider Prinzipien erlaubt somit eine Ausdehnung des Dynamikbereichs und die Nutzung zusätzlicher Informationen, wie z.B. der Pulsenergie, bei der Detektion des Signals und der Ableitung von Distanzinformationen. Da für elektrooptische Distanzmesser der Dynamikbereich der Empfangsschaltung zu maximieren ist, um möglichst viele Anwendungsbereiche abdecken zu können, bietet diese Kombination der Methoden wesentliche Vorteile.

Die Kombination der Methoden erlaubt zudem auch eine Vereinfachung der technischen Ausführung. Da der vom Samplingsystem abzudeckende Dynamikbereich verkleinert wird, werden wesentlich kleiner Auflösungen der AD-Wandlung benötigt, was eine geringere Komplexität bzw. niedrigere Anforderungen an die Komponenten ermöglicht. Im Betriebszustand A) wird ebenfalls nur eine geringe Auflösung benötigt, da hier durch Mittelwertbildung im Sinne der Signalakkumulation die notwendige Auflösung erreicht wird. Die Auflösung der AD-Wandlung muss vornehmlich für den Betriebszustand B) im Zusammenhang mit der Abtastrate und der gewählten Pulslänge optimiert werden.

Durch die Kombination der Methoden können auch mehrere Pulse gleichzeitig auf der Messstrecke laufen, ohne dass Mehrdeutigkeits- bzw. Zuordnungsprobleme auftreten. Diese Signale sind dann beispielsweise über die Pulslänge kodiert und können mittels der Abtastung und entsprechender Signalverarbeitung dem zugehörigen Sendepuls zugeordnet werden.

Die direkte Abtastung des gesendeten Signals ermöglicht eine Rekonstruktion des Empfangssignals und somit eine genaue Lagebestimmung des Empfangssignals, wenn die Pulsform des gesendeten Signals hinreichend bekannt ist. In der einfachsten Ausführung wird beispielsweise der Schwerpunkt des Pulses als Pulsmittelpunkt angenommen.

Die erfindungsgemässe Kombination von Schwellwertmethode und Abtastmethode kann die durch die Abtastung rekonstruierte Pulsform nutzen, um die durch einen unsymmetrischen Puls oder eine Amplitudenvariation des Empfangspulses hervorgerufene Fehler der Schwellwertmethode rechnerisch zu korrigieren. Dabei kann durch die Samplingmethode die Energie des Empfangssignals bestimmt werden und somit der bereits erwähnte sogenannte Range Walk der Schwellwertmethode, d.h. die Abhängigkeit des Trigger- bzw. Schaltzeitpunkts von der Signalleistung, berechnet werden. Beispielsweise kann die gewonnene Information über die Impulsenergie dazu genutzt werden, um eine vorgeschaltetes elektrischen oder optisches Dämpfungsglied derart zu steuern, das die Empfangsleistung konstant gehalten wird und somit eine Verschiebung des Triggerpunkts der Schwellwertmethode in einem Regelkreis korrigiert wird.

Eine Lagebestimmung des Pulses im Frequenzbereich, über die Phasenbestimmung ausgewählter Frequenzanteile, kann vorteilhaft sein, wenn durch unkorrelierte Schwankungen der Sendepulsform die ausgewerteten Anteile des Sendepulsspektrums hinreichend unabhängig davon sind.

Zudem können im Bereich paralleler, gleichzeitiger Nutzung beider Ansätze Fehldetektionen der Schwellwertmethode identifiziert werden und somit die Zuverlässigkeit der Messwerte signifikant erhöht werden.

Weiter können Fehlmessungen der Abtastmethode durch die Schwellwertmethode erkannt werden oder zumindest kann die übermässige Abweichung der Messwerte beider Methode herangezogen werden, um Fehlmessungen zu identifizieren. Diese Fehler können durch Übersprechen im Sensor oder durch externe Feldeinflüsse hervorgerufen werden. Der Fehlererkennungswahrscheinlichkeit kommt zugute, dass mit grosser Wahrscheinlichkeit ein elektromagnetisches Übersprechen unterschiedliche Auswirkung auf die unterschiedliche Realisierung der Schwellwertmethode und der Abtastmethode hat und somit die Asymmetrie zu unterschiedlichen Fehlereinflüssen in den Schaltungen führt, was letztlich als Abweichung erkannt werden kann.

Die gemeinsame Nutzung der Ergebnisse beider Methoden kann ebenfalls eine Genauigkeitssteigerung ermöglichen. In diesem Fall werden eine gemeinsame Empfangsoptik und eine gemeinsame erste Verstärkerstufe verwendet. Das Signal wird dann aufgeteilt und für die beiden Methoden optimiert weiterverarbeitet.

Der Vorteil liegt also gegenüber zwei oder mehreren parallel arbeitenden Distanzmessern darin, dass eine Vereinfachung durch die gemeinsame Nutzung der Empfangsoptik und Teilen der Empfangselektronik möglich ist. Bei dieser Verwendung der gleichen Empfangsoptik und Teilen der Empfangselektronik werden ebenfalls Laufzeitunterschiede durch Temperatureinflüsse zwischen den Signalwegen minimiert.

Ein weiterer Vorteil ist die Erkennung von Mehrfachzielen. Die Samplingmethode liefert auch zuverlässige Distanzwerte bei mehr als einem Zielobjekt. Sogar im Fall einer Signalübersteuerung kann die Abtastmethode nutzbar sein, sie kann als Pre-Trigger für die Schwellwertmethode benutzt werden. Dabei wird der Detektionsmechanismus der Schwellwertmethode lediglich im Zeitfenster des zugeordneten Zielobjekts freigegeben (Detect enable).

Bei übersteuertem Empfänger kann die Schwellwertmethode immer noch die Signallage bestimmen, während die Samplingmethode nicht genug Messpunkte auf den Signalflanken für eine hinreichend genaue Pulslagebestimmung hat, da in diesem Betriebsfall die Messunsicherheit durch das Abtastintervall definiert ist. Somit kann die Abtastrate für die Abtastmethode grösser als ohne Anwendung der Schwellwertmethode gehalten werden.

In Hinblick auf die geräteseitige Auslegung kann der vom AD-Wandler abzudeckende Dynamikbereich klein gehalten werden. Zudem führt der Betrieb bei A) durch die damit verbundene Mittelung zu einer virtuellen Erhöhung der Auflösung des AD-Wandler, wenn hinreichend unkorreliertes Rauschen dem abzutastenden Signal überlagert ist. Dieses Rauschen kann durch das Empfangssystem, der Signalquelle, zeitvarianten Übertragungseigenschaften der Messstrecke oder Hintergrundstrahlung verursacht sein.

Sender- bzw. quellenseitig kann ein Übergang von der Pulsmessung auf kontinuierliche Signale realisiert werden, wenn, z.B. durch ein Phasenmessverfahren, die Genauigkeit oder die Messrate erhöht werden soll.

Das erfindungsgemässe Distanzmessverfahren sowie der erfindungsgemäss Distanzmesser werden nachfolgend anhand von in der Zeichnung schematisch dargestellten Ausführungsbeispielen rein beispielhaft näher beschrieben. Im einzelnen zeigen

Fig.1 die Prinzipdarstellung eines elektrooptischen Distanzmessers nach dem Stand der Technik;

Fig.2 die Prinzipdarstellung eines Laufzeitmessverfahrens nach dem Stand der Technik;

Fig.3 die Prinzipdarstellung eines Abtastverfahrens für zurückgestreute Lichtsignale nach dem Stand der Technik;

Fig.4 die Prinzipdarstellung der Sättigungsproblematik des Abtastverfahrens;

Fig.5 die Prinzipdarstellung eines Schwellwertverfahrens für zurückgestreute Lichtsignale nach dem Stand der Technik;

Fig.6 die Prinzipdarstellung der Schwellenproblematik des Schwellwertverfahrens;

Fig.7 die Prinzipdarstellung des erfindungsgemässen Distanzmessverfahrens;

Fig.8 ein Blockschaltbild eines Ausführungsbeispiels eines Empfängers des erfindungsgemässen Distanzmessers und

Fig.9 ein Blockschaltbild eines Ausführungsbeispiels des erfindungsgemässen Distanzmessers.

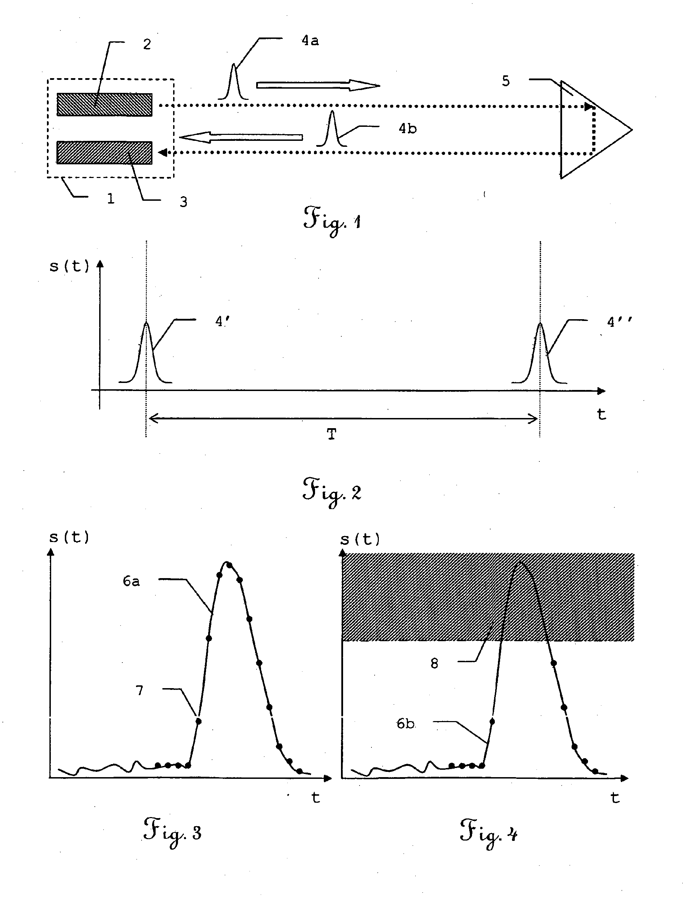

Fig.1 zeigt die Prinzipdarstellung eines elektrooptischen Distanzmessers 1 des Stands der Technik nach dem Pulslaufzeitprinzip. In dem Distanzmesser 1 sind ein Sender 2 und ein Empfänger 3 angeordnet. Der Sender 2 emittiert einen Lichtpuls 4a, der nach der Reflektion bzw. Rückstreuung an einem Ziel, z.B. einem Retroreflektor 5, wieder als zurückgestreuter Lichtpuls 4b vom Empfänger 3 detektiert wird. Anstelle der Lichtpulse kann erfindungsgemäss auch ein kontinuierlich moduliertes Sendesignal verwendet werden.

Wie in Fig.2 in Prinzipdarstellung erläutert, wird die Entfernung aus der Laufzeit T als zeitliche Differenz zwischen dem Startzeitpunkt S des Aussendens eines Lichtpulses 4' und dem Empfangszeitpunkt des zurückgestreuten Lichtpulses 4" ermittelt. Die Ermittlung des Empfangszeitpunktes erfolgt dabei durch die Auswertung eines Merkmals des Signalimpulses s(t), z.B. durch das Überschreiten einer Signalschwelle oder durch Schwerpunktbestimmung des integrierten Pulsverlaufs. Wie erwähnt sind beim Schwellwertverfahren auch andere Methoden zur Messung der Laufzeit T nutzbar, wie beispielsweise die Umwandlung des Empfangssignals in ein bipolares Signal und anschliessende Bestimmung des Nulldurchgangs.

Fig.3 veranschaulicht das Prinzip eines Abtastverfahrens für zurückgestreute Lichtsignale nach dem Stand der Technik. Ein empfangenes Signal 6a bzw. dessen Signalverlauf wird zu verschiedenen Zeitpunkten 7 bzw. zugeordneten Zeitintervallen abgetastet, so dass sich die Signalform ableiten lässt. Um auch grosse Variationen des Signalimpulses s(t) detektieren zu können, ist empfängerseitig eine hohe Dynamik erforderlich, welche die vollständige Erfassung bzw. Abtastung des Signals 6a erlaubt. Anderenfalls kann die in Fig.4 dargestellte Situation auftreten, wenn Teile des Signals 6b ausserhalb des Dynamikbereichs liegen und es zu einer Sättigungsproblematik des Abtastverfahrens kommt. Oberhalb einer Sättigungsgrenze existiert ein gesättigter Bereich 8 des Empfängers, in dem keine sinnvoll nutzbaren Abtastwerte des Pulses zur Verfügung stehen. Die Abtastung des Signals 6b wird dann auf den unterhalb der Sättigungsgrenze liegenden Bereich beschränkt. Insbesondere bei einer hohen Flankensteilheit ist eine Bestimmung des Signalform und Lage dann schwierig.

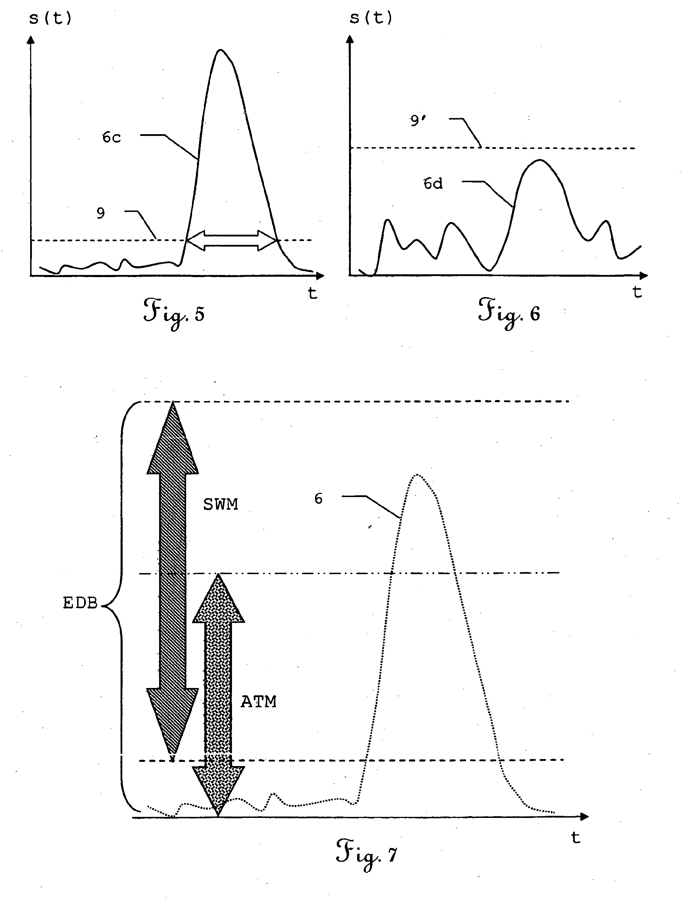

In Fig.5 wird ein Schwellwertverfahren für zurückgestreute Lichtsignale 6c nach dem Stand der Technik erläutert. Um Rauschen, Hintergrundanteile oder systematische Störsignale wie beispielsweise durch das optische und elektrische Übersprechen zwischen Sendersignalweg und Empfängersignalweg zu unterdrücken und von einer Detektion auszuschliessen, wird eine Detektionsschwelle 9 verwendet. Unterhalb dieser Detektionsschwelle 9 liegende Signalintensitäten s(t) führen nicht zu einem Ansprechen der ein Stoppsignal generierenden Empfangseinheit als Discriminator und somit nicht zu einer Detektion. Überschreitet das Signal 6c in seiner Intensität die Detektionsschwelle 9 erfolgen die Detektion und damit die Erzeugung des Stoppsignals und die Registrierung des Empfangszeitpunktes. Das von dem Schwellwertverfahren bereitgestellte Ausgangsignal ist somit abhängig vom Erreichen bzw. Überschreiten der Detektionschwelle 9 durch das empfangene bzw. Eingangssignal. Bleibt die Signalintensität s(t) jedoch wie im Beispiel der Fig.6 dargestellt, stets unterhalb einer Detektionsschwelle 9', so kommt es zu keinem Ansprechen des Discriminators und das Signal 6d wird nicht detektiert. Diese Schwellenproblematik des Schwellwertverfahrens tritt beispielsweise bei grossen Messdistanzen oder entsprechenden Hintergrundeinflüssen, welche die nötige Schwellenhöhe das Schwellensignal nach oben treiben können, auf.

Fig.7 zeigt das erfindungsgemässe Distanzmessverfahren in Prinzipdarstellung. Erfindungsgemäss werden die Prinzipien der Schwellwertmethode SWM und der Abtastmethode ATM kombiniert, so dass ein zurückgestreutes Signal 6 mit einem erweiterten Dynamikbereich EDB erfasst und detektiert werden kann. Parallel zum Detektieren des vom Zielobjekt zurückgestreuten Lichtsignals 6 nach der Schwellwertmethode SWM erfolgt eine Signalabtastung zur Identifikation und zeitlichen Lagebestimmung des zurückgestreuten Lichtsignals 6. Dabei Überlappen die Dynamikbereiche der Schwellwertmethode SWM und der Abtastmethode ATM zu einem erweiterten Dynamikbereich EDB, wobei aber auch bloss aneinander angrenzende Bereiche realisierbar sind. Damit werden beim Detektieren für einen unteren und einen oberen Dynamikbereich unterschiedliche Detektionsverfahren für dasselbe Lichtsignal parallel, insbesondere zeitgleich, verwendet, wobei der obere Dynamikbereich durch die Schwellwertmethode SWM und der untere Dynamikbereich durch eine Signalabtastung der Abtastmethode ATM zur Identifikation und zeitlichen Lagebestimmung des zurückgestreuten Lichtsignals erfasst werden.

Für den Extremfall sehr hoher Signalintensitäten kann immer noch die Schwellwertmethode SWM verwendet werden, wohingegen bei sehr schwachen Signalintensitäten durch die Abtastmethode ATM noch eine Detektion erfolgen kann und Informationen extrahiert werden können. Insbesondere bei schwachen Signalen mit einem Signal-Rausch-Verhältnis < 10 können mittels der Abtastmethode für erfasste Signale durch Akkumulation von weit über 1000 Pulsen das Signal-RauschVerhältnis gesteigert und dadurch die Distanzmessung ermöglicht werden. Im Überlappungsbereich der Signalstärken tragen beide Prinzipien zugleich zur Detektion bei und erlauben eine verbesserte Signalauswertung.

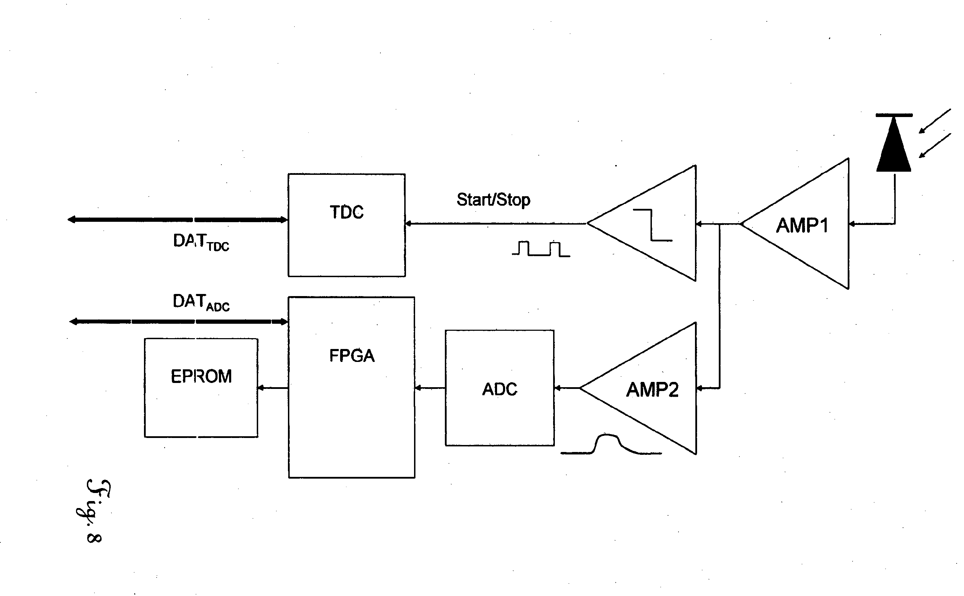

Fig.8 zeigt ein Blockschaltbild eines Ausführungsbeispiels für einen Empfänger des erfindungsgemässen Distanzmessers. Das vom Zielobjekt reflektierte optische Signal wird mittels einer Photodiode APD empfangen und mittels eines rauscharmen Breitbandverstärkers AMP1 verstärkt. Das resultierende elektrische Signal wird in 2 Kanäle aufgeteilt und anschliessend der erfindungsgemässen kombinierten Detektionsschaltung (unten) und Zeitmesschaltung (oben) zugeführt. Einerseits wird das Signal möglichst linear mittels einer Verstärkerstufe AMP2 verstärkt und einer schnellen, signalauflösenden Analog-Digital-Wandlerschaltung ADC mit angepasster Zeit- und Amplitudenauflösung zugeführt. Die Abtastdaten werden in Echtzeit oder pipelined in einer entsprechend ausgelegten Elektronik-Hardware FPGA verarbeitet und in einem Speicher EPROM abgelegt oder ausgegeben. Bei schwachen Signalen werden die Empfangssignale zeitrichtig zur Signalemission akkumuliert, so dass die Signalabtastung akkumulierend für mehrere Lichtsignale erfolgt. Realisierbar ist auch eine direkte Distanzbestimmung auf einem genügend grossen und entsprechend programmierten FPGA. Beispielsweise werden Distanz und Zeitmarke in Echtzeit ausgegeben.

Anderseits wird das Ausgangssignal des Verstärkers AMP1 parallel einem Diskriminator zugeführt. Liegt das Empfangssignal über dem Schwellwert, wird eine Triggereinheit aktiviert, welche aus dem Empfangssignal anhand eines Formmerkmals ein Start- oder Stoppsignal erzeugt. Eine nachgeschaltete Zeitmessschaltung TDC, digitalisiert diese Triggersignäle mit einer Genauigkeit von wenigen Picosekunden.

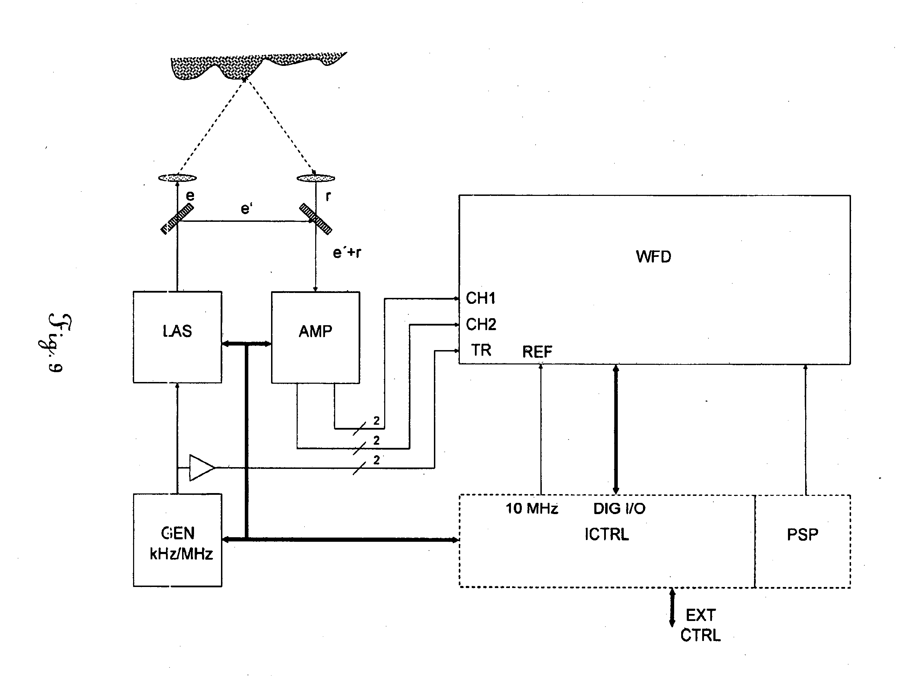

Die Zeitdifferenz t dieser Signale ist dann der zu bestimmenden Distanz D proportional. Bei hinreichend bekannter Ausbreitungsgeschwindigkeit c des Messsignals und der Berücksichtigung Systematischer Fehler, z. B. durch eine Referenzstrecke, wie in Fig.9 gezeigt, kann durch die elementare Beziehung

$$D = \frac{1}{2} c \cdot t$$ die Distanz D zum Messobjekt bestimmt werden. Die Abtastwerte des Zeit-Digital-Wandlers TDC und der Analog-Digital-Wandlerschaltung ADC werden über die Datenleitungen $DAT_{TDC}$ und $DAT_{ADC}$ zur Weiterverarbeitung übergeben.

Fig.9 zeigt ein Blockschaltbild eines Ausführungsbeispiels des erfindungsgemässen Distanzmessers, wobei die erfindungsgemässe Schaltung vorwiegend in den in Fig.8 erläuterten Modulen AMP und WFD realisiert ist. Die funktionalen Abläufe des Distanzmessers mit allen Modulen werden von einer Steuereinheit ICTRL mit einer Stromversorgung PSP gesteuert, wobei die zeitlich hochaufgelösten Abläufe durch einen zentralen, ppm-genauen Quarzoszillator definiert sind. Ein Frequenzgenerator GEN erzeugt die entsprechenden Signale, die einerseits den optoelektronischen Sender LAS, anderseits die Module AMP und WFD synchronisieren. Die emittierten Lasersignale durchlaufen entweder seriell oder gleichzeitig einen internen Lichtweg (e') und externen Lichtweg (e) + (r). Der externe Lichtweg ist auf das zu vermessende Zielobjekt gerichtet. Der interne Lichtweg dient in bekannter Weise zur Kalibrierung der Absolutdistanz. Im Fall einer gleichzeitigen Messung der beiden Lichtwege (e') und (e) trifft das Empfangssignal (e' + e) auf den Empfänger AMP. Die optoelektronische Empfängereinheit AMP weist beispielsweise die Module AMP1, AMP2 und den Discriminator aus Fig.8 auf, wobei die Verarbeitungseinheit WFD die beiden Module der Zeitmessschaltungen nach der Methode des Schwellwertverfahrens und des Samplingverfahren bzw. Abtastverfahrens aufweist. Der Empfänger besitzt damit einen unteren und einen oberen Dynamikbereich, wobei der untere Dynamikbereich durch das schwellwertabhängige Modul als Detektionseinheit und der oberen Dynamikbereich durch das Modul des Samplingverfahrens als Abtasteinheit bereitgestellt werden. Sind beide Zeitmesskanäle gleichzeitig aktiv, so kann beispielsweise nach erfolgter Ermittlung der Signalstärke die optimale Distanzauswertemethode selektiert werden. Bei Amplituden mittlerer Signalstärke überlappen sich oberer und unterer Dynamikbereich. In dieser Situation können beide Methoden gleichzeitig voll genutzt werden, denn beide Detektions-und Auswerteverfahren sind parallel aktiv und die Signalinformationen können vorteilhaft kombiniert verarbeitet werden.

Die beiden Ausgangssignale CH1 und CH2 der Empfängereinheit AMP entsprechen den beiden Signalen der erfindungsgemässen Distanzmessmethode. Das Signal CH1 wird der Distanzmesseinheit nach dem Schwellwertverfahren zugeführt und das Signal CH2 wird von einem schnellen Analog-DigitalWandler der zugeordneten Samplingeinheit erfasst. Die Module der erfindungsgemässen Distanzmesseinheit mit erweitertem Dynamikbereich WFD erfasst auf bereits beschriebene Art die Zeitintervalle und Signaldaten zum wenigsten einen Zielobjekt. Die Resultate und weitere Daten werden über die Schnittstellen der Steuereinheit ICTRL ausgegeben. Diese Steuereinheit ICTRL berechnet die endgültige Distanz und/oder berücksichtigt allfällige Korrekturen wie Range Walk, Temperatur oder Luftdruck Einflüsse. Über die Verbindung EXT/CTRL können die Daten nach aussen gegeben werden.

**Patentansprüche**

1. Distanzmessverfahren mit wenigstens einem

    • Aussenden wenigstens eines Lichtsignals, insbesondere von Laserlicht, auf ein Zielobjekt (5);
    • Detektieren des vom Zielobjekt (5) zurückgestreuten Lichtsignals (6);
    • Ableiten einer Distanz zum Zielobjekt (5);

    **dadurch gekennzeichnet, dass**
    beim Detektieren für einen unteren und einen oberen Dynamikbereich unterschiedliche Detektionsverfahren für dasselbe Lichtsignal (6) parallel, insbesondere zeitgleich, verwendet werden, wobei der untere Dynamikbereich unterhalb der Sättigungsgrenze einer Abtasteinheit (WFD) für eine Signalabtastung und der obere Dynamikbereich oberhalb der Sättigungsgrenze liegen und

    - der obere Dynamikbereich durch eine Schwellwertmethode und
    - der untere Dynamikbereich durch die Signalabtastung zur Identifikation und zeitlichen Lagebestimmung des zurückgestreuten Lichtsignals (6)

    erfasst werden.

2. Distanzmessverfahren nach Anspruch 1,
    **dadurch gekennzeichnet, dass**
    die Signalabtastung akkumulierend für mehrere Lichtsignale (6) erfolgt.

3. Distanzmessverfahren nach Anspruch 1 oder 2,
    **dadurch gekennzeichnet, dass**
    das Lichtsignal gepulst ausgesendet wird und das Ableiten mittels Pulslaufzeitmessverfahren erfolgt.

4. Distanzmessverfahren nach Anspruch 3,
    **dadurch gekennzeichnet, dass**
    das beim Aussenden eine Folge von Lichtpulsen (4') ausgesendet wird und für jeden der Lichtpulse (4') das Ableiten wenigstens einer Distanz erfolgt.

5. Distanzmessverfahren nach Anspruch 1 oder 2,
    **dadurch gekennzeichnet, dass**
    das Lichtsignal kontinuierlich moduliert ausgesendet wird und das Ableiten mittels Phasenmessverfahren erfolgt.

6. Distanzmessverfahren nach einem der vorangehenden Ansprüche,
    **dadurch gekennzeichnet, dass**
    die Amplitude oder Energie des zurückgestreuten Lichtsignals (6) bestimmt wird, insbesondere zur Berechnung der Abhängigkeit des Schaltpunkts der Schwellwertmethode von der Amplitude oder Energie des zurückgestreuten Lichtsignals (6).

7. Elektrooptischer Distanzmesser mit wenigstens

    • einer Strahlquelle (LAS) zum Aussenden wenigstens eines Lichtsignals, insbesondere von Laserlicht, auf ein Zielobjekt (5);
    • einem Empfänger (APD) zum Detektieren des vom Zielobjekt zurückgestreuten Lichtsignals (6)

        o mit einer schwellwertabhängigen Detektionseinheit und
        o einer Abtasteinheit (WFD) zum Abtasten des zurückgestreuten Lichtsignals (6);

    • einer Steuer- und Auswertekomponente zum Ableiten einer Distanz zum Zielobjekt (5);

    **dadurch gekennzeichnet dass**
    der Empfänger einen unteren und einen oberen Dynamikbereich aufweist, wobei der untere Dynamikbereich unterhalb der Sättigungsgrenze der Abtasteinheit (WFD) und der obere Dynamikbereich oberhalb der Sättigungsgrenze liegen und die schwellwertabhängige Detektionseinheit den oberen Dynamikbereich und die Abtasteinheit (WFD) den unteren Dynamikbereich abdecken.

8. Distanzmesser nach Anspruch 7,
    **dadurch gekennzeichnet dass**
    ein dem Empfänger (APD) vorgeschaltetes elektrisches oder optisches Dämpfungsglied so gesteuert wird, dass die Empfangsleistung konstant gehalten wird.

9. Distanzmesser nach Anspruch 7,
    **dadurch gekennzeichnet dass**
    die Signalquelle so gesteuert wird, dass die Empfangsleistung konstant gehalten wird.

10. Distanzmesser nach Anspruch 7, 8 oder 9,
    **gekennzeichnet durch**
    eine für die schwellwertabhängige Detektionseinheit und die Abtasteinheit (WFD) gemeinsame Empfangsoptik und/oder Verstärkerstufe.

11. Distanzmesser nach einem der Ansprüche 7 bis 10,
    **dadurch gekennzeichnet, dass**
    die Strahlungsquelle (LAS) zur Aussendung eines kontinuierlich modulierten Lichtsignals und die Steuer-und Auswertekomponente als Phasenmesser ausgebildet ist.

12. Distanzmesser nach einem der Ansprüche 7 bis 10,
    **dadurch gekennzeichnet, dass**
    die Strahlungsquelle (LAS) zur Aussendung eines gepulsten Lichtsignals und die Steuer- und Auswertekomponente als Laufzeitmesser ausgebildet ist.

## Claims

1. Distance measuring method comprising at least

    • emission of at least one light signal, in particular of laser light, to a target object (5);
    • detection of the light signal (6) scattered back by the target object (5);
    • derivation of a distance to the target object (5);

    **characterized in that** detection methods differing for a lower and an upper dynamic range are used in parallel, in particular simultaneously, during detection for the same light signal (6), the lower dynamic range being below the saturation limit of a sampling unit (WFD) for signal sampling and the upper dynamic range being above the saturation limit and

    - the upper dynamic range being determined by a threshold value method and
    - the lower dynamic range being determined by signal sampling for identifying the back-scattered light signal (6) and determining the position thereof as a function of time.

2. Distance measuring method according to Claim 1, **characterized in that** the signal sampling is effected cumulatively for a plurality of light signals (6).

3. Distance measuring method according to Claim 1 or 2, **characterized in that** the light signal is emitted in pulsed form and the derivation is effected by means of a pulse transit time measuring method.

4. Distance measuring method according to Claim 3, **characterized in that**, during emission, a sequence of light pulses (4') is emitted and the derivation of at least one distance is effected for each of the light pulses (4').

5. Distance measuring method according to Claim 1 or 2, **characterized in that** the light signal is emitted with continuous modulation and the derivation is effected by means of a phase measuring method.

6. Distance measuring method according to any of the preceding claims, **characterized in that** the amplitude or energy of the back-scattered light signal (6) is determined, in particular for calculating the dependence of the switching point of the threshold value method on the amplitude or energy of the back-scattered light signal (6).

7. Electro-optical distance measuring device comprising at least

    • a beam source (LAS) for emission of at least one light signal, in particular of laser light, to a target object (5);
    • a receiver (APD) for detection of the light signal (6) scattered back by the target object,

        ○ comprising a threshold value-dependent detection unit and
        o a sampling unit (WFD) for sampling the back-scattered light signal (6);

    • a control and evaluation component for deriving a distance to the target object (5);

    **characterized in that** the receiver has a lower and an upper dynamic range, the lower dynamic range being below the saturation limit of the sampling unit (WFD) and the upper dynamic range being above the saturation limit and the threshold value-dependent detection unit covering the upper dynamic range and the sampling unit (WFD) covering the lower dynamic range.

8. Distance measuring device according to Claim 7, **characterized in that** an electrical or optical attenuator upcircuit of the receiver (APD) is controlled in such a way that the receiving power is kept constant.

9. Distance measuring device according to Claim 7, **characterized in that** the signal source is controlled in such a way that the receiving power is kept constant.

10. Distance measuring device according to Claim 7, 8 or 9, **characterized by** a receiving optical system and/or amplifier stage common to the threshold value-dependent detection unit and the sampling unit (WFD).

11. Distance measuring device according to any of Claims 7 to 10, **characterized in that** the radiation source (LAS) is formed for emitting a continuously modulated light signal and the control and evaluation component is in the form of a phase measuring device.

12. Distance measuring device according to any of Claims 7 to 10, **characterized in that** the radiation source (LAS) is formed for emitting a pulsed light signal and the control and evaluation component is in the form of a transit time measuring device.

## Revendications

1. Procédé de mesure de distance avec au moins une

    • émission d'au moins un signal lumineux, en particulier de lumière laser, sur un objet cible (5) ;

• émission du signal lumineux (6) rétrodiffusé par la cible (5) ;

• dérivation d'une distance de l'objet cible (5),

**caractérisé en ce que**,

lors de la détection, différents procédés de détection sont utilisés parallèlement, en particulier simultanément, pour une plage dynamique inférieure et une plage dynamique supérieure pour le même signal lumineux (6), la plage dynamique inférieure étant située en dessous de la limite de saturation d'une unité de balayage (WFD) pour un balayage de signal et la plage dynamique supérieure au-dessus de la limite de saturation et

- la plage dynamique supérieure étant détectée par une méthode de valeur seuil et
- la plage dynamique inférieure par le balayage de signal pour l'identification et la détermination de la position temporelle du signal lumineux rétrodiffusé (6).

2. Procédé de mesure de distance selon la revendication 1, **caractérisé en ce que** le balayage de signal se fait par accumulation pour plusieurs signaux lumineux (6).

3. Procédé de mesure de distance selon la revendication 1 ou 2, **caractérisé en ce que** le signal lumineux est émis en étant pulsé et la dérivation se fait au moyen d'un procédé de mesure du temps de propagation des impulsions.

4. Procédé de mesure de distance selon la revendication 3, **caractérisé en ce que**, lors de l'émission, une séquence d'impulsions lumineuses (4') est émise et la dérivation d'au moins une distance se fait pour chacune des impulsions lumineuses (4').

5. Procédé de mesure de distance selon la revendication 1 ou 2, **caractérisé en ce que** le signal lumineux est émis en étant modulé en continu et la dérivation se fait au moyen d'un procédé de mesure de phase.

6. Procédé de mesure de distance selon l'une des revendications précédentes, **caractérisé en ce que** l'amplitude ou l'énergie du signal lumineux rétrodiffusé (6) est déterminée, en particulier pour le calcul de la dépendance du point de commutation de la méthode de la valeur seuil de l'amplitude ou de l'énergie du signal lumineux rétrodiffusé (6).

7. Télémètre électro-optique avec au moins

• une source de faisceau (LAS) pour émettre au moins un signal lumineux, en particulier de lumière laser, sur un objet cible (5) ;

• un récepteur (APD) pour détecter le signal lumineux (6) rétrodiffusé par l'objet cible

○ avec une unité de détection dépendante de la valeur seuil et
○ une unité de balayage (WFD) pour balayer le signal lumineux rétrodiffusé (6),

• une composante de commande et d'évaluation pour dériver une distance de l'objet cible (5),

**caractérisé en ce que** le récepteur présente une plage dynamique inférieure et une plage dynamique supérieure, la plage dynamique inférieure étant située en dessous de la limite de saturation de l'unité de balayage (WFD) et la plage dynamique supérieure au-dessus de la limite de saturation et l'unité de détection dépendante de la valeur seuil couvrant la plage dynamique supérieure et l'unité de balayage (WFD) la plage dynamique inférieure.

8. Télémètre selon la revendication 7, **caractérisé en ce qu'**un élément d'atténuation électrique ou optique placé en amont du récepteur (APD) est commandé de telle manière que la puissance de réception est maintenue constante.

9. Télémètre selon la revendication 7, **caractérisé en ce que** la source de signal est commandée de telle manière que la puissance de réception est maintenue constante.

10. Télémètre selon la revendication 7, 8 ou 9, **caractérisé par** une optique de réception et/ou un étage amplificateur commun pour l'unité de détection dépendante de la valeur seuil et l'unité de balayage (WFD).

11. Télémètre selon l'une des revendications 7 à 10, **caractérisé en ce que** la source de faisceau (LAS) pour émettre un signal lumineux modulé en continu et la composante de commande et d'évaluation sont configurées comme des phasemètres.

12. Télémètre selon l'une des revendications 7 à 10, **caractérisé en ce que** la source de faisceau (LAS) pour émettre un signal lumineux pulsé et la composante de commande et d'évaluation sont configurées comme des compteurs de temps de propagation.

Fig. 1

Fig. 2

Fig. 3

Fig. 4

s(t)

6c

9

Fig. 5

s(t)

9'

6d

Fig. 6

EDB

SWM

ATM

6

t

Fig. 7

Fig. 8

**Fig. 9**

e

e'

r

e'+r

LAS

AMP

GEN
kHz/MHz

2

2

2

CH1

CH2

TR    REF

WFD

10 MHz    DIG I/O

ICTRL

PSP

EXT
CTRL

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0245213 A
- WO 2005008271 A

- US 6115112 A